# EUROPÄISCHE PATENTSCHRIFT

(11) **EP 3 099 178 B1**
(45) Veröffentlichungstag und Bekanntmachung des Hinweises auf die Patenterteilung: **08.05.2019**
(21) Anmeldenummer: 15704969.3
(22) Anmeldetag: 30.01.2015
(51) Int. Cl.: A22C 7/00, A23P 10/00, A47J 43/20, B30B 11/00, B30B 11/02, A23P 30/10, A23L 13/00, A23L 13/50, A23L 13/60, A23L 13/70

(54) **VORRICHTUNG UND VERFAHREN ZUR HERSTELLUNG VON FLEISCHWAREN**
DEVICE AND METHOD FOR PRODUCING MEAT PRODUCTS
DISPOSITIF ET PROCÉDÉ DE FABRICATION DE PRODUITS CARNÉS

(30) Priorität: 31.01.2014 DE 102014201819
(43) Veröffentlichungstag der Anmeldung: 07.12.2016
(73) Patentinhaber: Hukelmann, Bernhard, 49610 Quakenbrück (DE)
(72) Erfinder: Hukelmann, Bernhard, 49610 Quakenbrück (DE)
(74) Vertreter: Taruttis, Stefan Georg
(86) Internationale Anmeldenummer: PCT/EP2015/052003
(87) Internationale Veröffentlichungsnummer: WO 2015/114118

(56) Entgegenhaltungen:
- EP-A1- 2 468 105
- WO-A1-2013/148322
- DE-A1-102006 035 730
- FR-A5- 2 163 850
- GB-A- 862 273
- GB-A- 1 078 761
- US-A- 4 941 379

## Beschreibung

Die vorliegende Erfindung betrifft eine Vorrichtung und ein mit der Vorrichtung durchführbares Verfahren zur Herstellung von Fleischwaren mit rohen Fleischstücken, die zusammengefügt und anschließend gegart werden, z.B. in einer Form wie beispielsweise Kochschinken. Optional können die rohen Fleischstücke mittels des Verfahrens wässrige Zusammensetzungen aufnehmen, z.B. Flüssigwürze, insbesondere zur Würzung und/oder um Gewichtsverluste beim anschließenden Garen auszugleichen und/oder mittels des Verfahrens mit wässrigen oder öligen Zusammensetzungen mariniert werden.

Die Vorrichtung zeichnet sich dadurch aus, dass sie ein schnelles Zusammenfügen roher Fleischstücke durch deren effektive mechanische Belastung bewirkt, die eine wesentlich kürzere Verfahrensdauer dieses Schritts gegenüber der Behandlung mit herkömmlichen Poltermaschinen oder Tumblern erlaubt. Bevorzugt erlauben die Vorrichtung und das Verfahren, rohe Fleischstücke in einer Form, wahlweise in einer elastischen Hülle oder einer starren Form, z.B. einem Kochkasten, mechanisch zu belasten, bis deren Zusammenfügen bzw. Verkleben auftritt, z.B. durch Austritt von Fleischsaft und/oder Auflockerung von deren Struktur. Das mechanische Belasten roher Fleischstücke bis zu deren Zusammenfügen wird auch als Poltern, Massieren oder Tumblen bezeichnet.

### Stand der Technik

Die EP1139798 B1 beschreibt das Einlegen von Fleischstücken, die in einem gattungsgemäßen Verfahren gepoltert worden sind, in eine Form und das Garen dieser Fleischstücke in der Form.

Die DE 4324626 A1 beschreibt eine Polter- oder Massiermaschine für rohes Fleisch, die in einem Behälter ein angetriebenes Paddel zum Belasten und Rühren roher Fleischstücke aufweist.

Die DE 4026501 A1 beschreibt eine herkömmliche Poltermaschine mit einer sich drehenden Trommel, an deren Innenfläche Mitnehmer angebracht sind, die Fleischstücke hoch nehmen und wieder frei fallenlassen. Bei der Behandlung roher Fleischstücke mit solchen Poltermaschinen wird vorgeschlagen, Kühlkörper während der mechanischen Belastung der Fleischstücke innerhalb der Trommel vorzusehen.

Diese bekannten Vorrichtungen zur Behandlung roher Fleischstücke durch mechanische Belastung sind dadurch nachteilig, dass der Vorgang für ein ausreichendes mechanisches Belasten für den Fleischsaftaustritt bzw. zum Verkleben der rohen Fleischstücke viel Zeit in Anspruch nimmt, bei Trommeln beispielsweise mehrere Stunden. Ein weiterer Nachteil, insbesondere offener Trommeln zum Poltern liegt darin, dass die Fleischstücke in Kontakt mit der Umgebungsluft behandelt werden, wenn nicht eine aufwändige Vakuumierung der Trommel erfolgt. Weiterhin erfordern solche Trommeln, dass die rohen Fleischstücke frei beweglich sind, so dass eine Behandlung einer Vielzahl von Fleischstücken innerhalb einer gemeinsamen Hülle nicht möglich ist. Ein Nachteil liegt darin, dass durch dieses Verfahren im Allgemeinen die Keimbelastung des Produkts erhöht wird.

Die WO 2013/148322 A1 beschreibt auf einem Rad angeordnete Stanzformen, die gegen ein Förderband gedrückt werden und mit Ultraschall beaufschlagt werden können, um eine Lebensmittelmasse zwischen den Stanzformen und dem Förderband zu formen.

Die GB 862,273 A beschreibt zum Füllen von Dosen mit Schinken, dass der Druck, mit dem Schinken in eine Dose gefüllt wird, bei Vibration der Dose geringer sein kann.

Die US 4,941,379 A beschreibt an einer Fördereinrichtung umlaufende Formen, in die Fleischstücke gefüllt werden, um überstehende Bereiche für die Portionierung abzuschneiden.

Die FR 2163850 A5 beschreibt zum Einmassieren von Salz in Schinken zwei untere horizontale Platten, die parallel zueinander abwechselnd hoch- und runter bewegt werden, wobei ein Schinken von einer oberhalb angebrachten Platte gegen die unteren Platten gepresst wird.

Die EP 2468105 A1 beschreibt zum Füllen von Dosen mit Fleisch, dass ein Preßstempel eine oszillierende Bewegung ausführt und dass die Dose fixiert sein oder vibrieren kann.
Die GB 1078761 A beschreibt zum Füllen von Fleisch in Kästen, in denen das Fleisch gegart oder geräuchert wird, dass das Fleisch zunächst in einer Pressform geformt wird und dann aus der Pressform in den an die Presse angeschlossenen Kasten geschoben wird.

Die US 2006/0141108 A1 beschreibt einen Tumbler mit einer drehangetriebenen, horizontal gelagerten Trommel, an deren Innenfläche Mitnehmer angebracht sind.

Die CH 670 035 A beschreibt zum Tumblen von Fleisch eine torusförmige Mulde nach Art eines Kutters, in der um eine horizontale Achse rotierende Flügel angeordnet sind.

Die DE 195 39 247 C2 beschreibt zur hydrodynamischen Behandlung von Fleisch in Lake einen Behälter, der außen oder innen einen Schwingungserzeuger für mehrere Schwingungen pro Sekunde mit einer Amplitude im Millimeterbereich oder darunter aufweist.

Die EP 2 671 481 A1 beschreibt eine Garungsvorrichtung, bei der ein beheizter offener Garungsbehälter in Vibrationen, lineare oder Kreisbewegungen versetzt wird. Diese Schrift betrifft keine Vorrichtung, die zur Behandlung rohen Fleisches vorgesehen ist, sondern einen Kocher. Dieser Kocher ist darauf ausgerichtet, die Lebensmittelstücke schonend zu bewegen, um diese nicht zu zerstören.

Die US 2011/0033587 A1 beschreibt einen Fläschchenwärmer, der zum Mischen eine Klemmvorrichtung für ein Fläschchen hat.

Die WO 2007/145516 A2 beschreibt zum Abschütteln von Fett nach dem Frittieren eine Hin- und Herbewegung der Halterung, in die ein Frittierkorb eingehängt wird.

Die DE 79 12 029 U1 beschreibt einen horizontal drehbaren Behälter zum Tumblen von Fleisch, dessen Umfangswand anteilig zylindrisch und anteilig aus winklig angeordneten Platten besteht.

Die DE 10 2009 014 293 A1 beschreibt zur Behandlung von Fleisch in Flüssigkeit einen Behälter, in dem eine drehbare Schaufel zum Mischen angeordnet ist, wobei ein periodisch aktiver Schwingungserzeuger Fleisch und Flüssigkeit mit Schwingungen beaufschlagen soll.

Die DE 10 2006 035 730 A1 beschreibt einen Tumbler mit einer drehangetriebenen, horizontal gelagerten Trommel, an deren Innenfläche Mitnehmer angebracht sind und zusätzlich zur Schwingungserzeugung am vertikalen Trommelboden zwei Vibrationsmotoren oder Ultraschallgeber.

### Aufgabe der Erfindung

Die Aufgabe der Erfindung liegt darin, eine Vorrichtung zur mechanischen Belastung von rohen Fleischstücken zur Verwendung bei der Herstellung von Fleischwaren bereitzustellen, mit der ein schnelleres Verfahren zur Herstellung von Fleischwaren, insbesondere die mechanische Belastung der rohen Fleischstücke zu deren Verkleben durchführbar ist, und bevorzugt die rohen Fleischstücke in einer Hülle enthalten sein können. Eine weitere Aufgabe liegt in der Bereitstellung eines Verfahrens und einer Vorrichtung zum schnellen Einbringen einer wässrigen oder öligen Zusammensetzung in rohes Fleisch, z.B. zum Marinieren. Dabei sollen wässrige Zusammensetzungen z.B. Gewichtsverluste beim anschließenden Garen ausgleichen.

### Allgemeine Beschreibung der Erfindung

Die Erfindung löst die Aufgabe mit den Merkmalen der unabhängigen Ansprüche, insbesondere mit einer Vorrichtung und deren Verwendung als Fleischbehandlungsmaschine zur Herstellung von Fleischwaren, bzw. mit einem Verfahren, das insbesondere mit der Vorrichtung durchgeführt wird. Die Vorrichtung weist Arbeitsflächen auf, die ein Innenvolumen aufspannen bzw. umfassen, von denen zumindest eine Arbeitsfläche einen Antrieb zur Hin- und Herbewegung, z.B. mit einer Frequenz von zumindest 1 Hz, bevorzugt zumindest 5 Hz, bevorzugter zumindest 10 Hz, bevorzugter zumindest 50 Hz aufweist. Die Hin- und Herbewegung der Arbeitsfläche erfolgt bevorzugt mit einer an die Masse rohen Fleischs angepassten Amplitude, z.B. bei 10 kg rohem Fleisch mindestens 0,5 cm bis 10 cm. Generell bevorzugt weist die Vorrichtung und das Verfahren daher eine fixierte oder einstellbare Amplitude für die Hin- und Herbewegung auf. Die zumindest eine angetriebene Arbeitsfläche dient zur Belastung der zumindest einen Arbeitsfläche gegen rohe Fleischstücke, die in dem von den Arbeitsflächen aufgespannten Innenvolumen angeordnet sind. Bevorzugt werden die rohen Fleischstücke anschließend an das Verfahren gegart, z.B. in einer Form zur Herstellung von Kochschinken. Die zumindest eine Arbeitsfläche ist dadurch relativ gegen die Fleischstücke zur Hin- und Herbewegung angetrieben, dass sie relativ zu den anderen Arbeitsflächen fixiert ist und diese gemeinsam zur Hin- und Herbewegung angetrieben sind, so dass sie durch die Trägheit der Fleischstücke relativ gegen diese angetrieben ist. Die Arbeitsflächen können kontinuierlich sein und das Innenvolumen dicht umfassen, insbesondere in Ausführungsformen, in denen die rohen Fleischstücke unmittelbar an den Arbeitsflächen angeordnet sind. Alternativ können die Arbeitsflächen diskontinuierlich sein und mit Abstand zueinander das Innenvolumen umfassen, so dass z.B. Lücken zwischen benachbarten Arbeitsflächen gebildet werden, insbesondere, wenn das Innenvolumen von einer elastischen Hülle und/oder von einer starren Hülle ausgekleidet ist, in der das rohe Fleisch anzuordnen ist. Diskontinuierliche Arbeitsflächen können aus einem Gitter oder beabstandeten Stangen bestehen und z.B. einen Gitterkäfig oder Stangenkäfig um das Innenvolumen bilden. Bevorzugt ist eine elastische oder starre Hülle geschlossen. Weiter bevorzugt enthält eine elastische oder starre Hülle die rohen Fleischstücke ohne Lufteinschlüsse bzw. unter Vakuum. Eine elastische Hülle kann z.B. aus einer Kunststofffolie, ein- oder mehrlagig, bestehen, optional mit einem Verstärkungsgewebe auf der Außenseite. Eine elastische Hülle kann auch eine steife Kunststofffolie oder ein Metallblech sein, das ringförmig geschlossen ist, dessen Querschnitt endständig offen ist oder von einer elastischen Folie überdeckt ist. Eine starre Hülle kann z.B. eine starre Dose aus Kunststoff und/oder Metallblech sein. Die Amplitude und/oder Frequenz, zu der die Arbeitsfläche angetrieben ist, kann abhängig von einem Signal eines Sensors gesteuert sein, der z.B. ein Leitfähigkeitsmessgerät, ein Drucksensor, Leitfähigkeitssensor, pH-Sensor oder Farbsensor ist. Weiter optional kann die Amplitude und/oder Frequenz abhängig von der aus den rohen Fleischstücken herzustellenden Fleischware vorbestimmt sein oder abhängig von einem Signal eines Sensors in vorbestimmtem Maß nach einem für die herzustellende Fleischware spezifischen Algorithmus gesteuert sein. So ist bevorzugt, die Amplitude und/oder Frequenz sowie Dauer der Hin- und Herbewegung für Kochschinken als Fleischware einzustellen, dass ein Verkleben der rohen Fleischstücke erreicht wird, bzw. für Kochwurst einzustellen, dass die rohen Fleischstücke nicht verkleben.

Nach der Erfindung, in der die Arbeitsflächen relativ zueinander zu einer Anordnung fixiert sind, werden die in dem von den Arbeitsflächen aufgespannten Innenvolumen angeordneten rohen Fleischstücke durch den Impuls, den die Hin- und Herbewegung erzeugt, mechanisch belastet. Die Hin- und Herbewegung kann daher auch als Schütteln bezeichnet werden.

Erfindungsgemäß erfolgt die Hin- und Herbewegung entlang zweier oder dreier Bewegungsachsen, die jeweils in einem Winkel aufeinanderstehen, z.B. in 90°, bei fixierter Anordnung der Arbeitsflächen zueinander. Dabei erfolgt die Hin- und Herbewegung entlang jeder der Bewegungsachsen mit einer Frequenz von zumindest 1 Hz. Bei der Hin- und Herbewegung entlang zweier Bewegungsachsen kann eine Anordnung zueinander fixierter Arbeitsflächen z.B. entlang einer Lissajousfigur bewegt werden. Dabei erfolgt die Hin- und Herbewegung entlang zweier oder dreier Bewegungsachsen bei jeweils unterschiedlicher Frequenz, z.B. mit einem Unterschied von 5 bis 50 % der Frequenzen relativ zur höheren Frequenz. Bei zwei Bewegungsachsen, die in 90° zueinander stehen, kann entlang der ersten Bewegungsachse die Hin- und Herbewegung z.B. bei einer Frequenz von 5 Hz erfolgen und entlang der zweiten Bewegungsachse bei 1 bis 4,9 Hz, insbesondere von 4,1 bis 4,8 Hz.

Generell können die rohen Fleischstücke in Mischung mit festem Salz und/oder einer flüssigen Zusammensetzung, die z.B. Gewürze und/oder Salz enthält, mit dem Verfahren behandelt werden. Es hat sich gezeigt, dass das Verfahren dann zur effektiven Aufnahme von Salz, z.B. in gelöster Form im rohen Fleisch verteilt, und/oder Wasser mit Gewürz führt. Entsprechend kann das Verfahren auch das Salzen und Marinieren von rohem Fleisch, bei Behandeln von rohem Fleisch mit einer wässrigen Zusammensetzung zur Aufnahme dieser Zusammensetzung in das Fleisch bewirken. In dieser Ausführungsform kann die Vorrichtung einen Detektor zur Bestimmung des Anteils wässriger Zusammensetzung, der innerhalb des Innenvolumens neben den rohen Fleischstücken vorliegt, aufweisen, wobei der Antriebsmotor abhängig von dem Detektor gesteuert ist, z.B. der Antriebsmotor gestoppt wird, wenn der Detektor wässrige Zusammensetzung unterhalb eines vorgegebenen Anteils feststellt. In dieser Ausführungsform ist die Vorrichtung z.B. eingerichtet, den Antriebsmotor für die Hin- und Herbewegung zu stoppen, wenn keine freie wässrige Zusammensetzung neben dem rohen Fleisch bestimmt wird.

Generell kann zumindest eine der Arbeitsflächen in verschiedenen Stellungen festlegbar sein, um das Innenvolumen in einem vorgegebenen Verhältnis zum rohen Fleisch einzustellen. Eine Arbeitsfläche kann z.B. in eine erste Stellung festlegbar sein, in der das von den Arbeitsflächen umfasste Innenvolumen nur anteilig, z.B. zu 70 bis 90% mit rohen Fleischstücken gefüllt ist, insbesondere während der Hin- und Herbewegung, und die Arbeitsfläche anschließend für die Garung in eine zweite Stellung zu bewegen und in dieser festzulegen, in der die rohen Fleischstücke gegeneinander gedrückt werden, z.B. bis das von den Arbeitsflächen umfasste Innenvolumen vollständig mit rohen Fleischstücken gefüllt ist.

Erfindungsgemäß können die rohen Fleischstücke in einer Hülle angeordnet sein, die in allen Ausführungsformen elastisch, z.B. von einer Kunststofffolie ausgebildet, oder starr sein kann, z.B. eine Dose, optional aus Blech oder Kunststoff ausgebildet. Entsprechend weist die Vorrichtung optional eine elastische oder starre Hülle innerhalb des von den Arbeitsflächen aufgespannten Innenvolumens auf, in der die rohen Fleischstücke anzuordnen sind. Weiter optional können die Fleischstücke in einem Kochkasten angeordnet sein, dessen eine Wand relativ zu den anderen beweglich ist, oder in einem Kochkasten, dessen Wände in einem um das Innenvolumen angeordneten Zustand zueinander fixiert sind. Dabei bilden die Wände die Arbeitsflächen. Wahlweise kann eine Hülle innerhalb eines Kochkastens angeordnet sein. Entsprechend kann bei der Vorrichtung das von den Arbeitsflächen aufgespannte Innenvolumen von einer elastischen Hülle oder einer starren Hülle zur Anordnung der rohen Fleischstücke darin ausgekleidet sein. Insbesondere in Ausführungsformen, in denen das Innenvolumen durch einen Kochkasten umfasst bzw. begrenzt wird, der die zueinander in einer Anordnung fixierten Arbeitsflächen bildet, werden bei Bewegung entlang einer Bewegungsachse, die senkrecht zu 2 Arbeitsflächen verläuft, diese 2 Arbeitsflächen gegen die rohen Fleischstücke belastet. Bei Bewegung entlang zweier, zueinander senkrecht angeordneter Bewegungsachsen wirken die zu den Bewegungsachsen in einem Winkel >0°, insbesondere senkrecht angeordneten Arbeitsflächen gegen die rohen Fleischstücke. Entsprechend wirken bei Bewegung der zueinander in einer Anordnung fixierten Arbeitsflächen, die z.B. durch einen Kochkasten gebildet werden, entlang dreier in einem Winkel, z.B. senkrecht zueinander angeordneten Bewegungsachsen alle Arbeitsflächen gegen die rohen Fleischstücke.

Optional können Arbeitsflächen zumindest zwei elektrische Kontakte aufweisen, die einen Leitfähigkeitssensor bilden, z.B. zwei einander gegenüberliegende Arbeitsflächen, die relativ zueinander fixiert sind. Weiter optional kann eine Hülle, die in dem Innenvolumen angeordnet ist und in der die rohen Fleischstücke anzuordnen sind, elektrisch leitfähige Abschnitte aufweisen, die an solchen elektrischen Kontakten der Arbeitsfläche anliegen, oder eine Hülle kann einen Leitfähigkeitssensor aufweisen. In dieser Ausführungsform weist die Vorrichtung ein Leitfähigkeitsmessgerät bzw. Widerstandsmessgerät auf, um die Änderung der elektrischen Leitfähigkeit bzw. des elektrischen Widerstands der rohen Fleischstücke zu messen. Da der elektrische Widerstand bzw. die Impedanz roher Fleischstücke mit zunehmender mechanischer Belastung abnimmt, kann die Vorrichtung eine Steuerung aufweisen, die bei Erreichen einer vorbestimmten absoluten oder relativen Änderung des Widerstands bzw. der Leitfähigkeit ein Signal abgibt und/oder den Antrieb ausstellt.

Weiter optional können Arbeitsflächen elektrische Kontakte zur Zuführung elektrischer Spannung aufweisen, die mit einem Generator zur Erzeugung von elektrischem Strom verbunden sind. Der elektrische Strom kann elektrische Impulse aufweisen, z.B. Hochspannungsimpulse, insbesondere mit Impulsleistungen von ca. 3 bis 10 MW, bevorzugt 5 MW, bei einer Pulsdauer von 10 bis 30 µs, bei einer Zeit zwischen den Impulsen von 3 bis 5 ms, bei einer mittleren Leistung von 25 bis 50 kW, bevorzugt ca. 25 kW, um Zellwände der rohen Fleischstücke zu öffnen, die damit einen Stoffaustausch begünstigen. Alternativ oder zusätzlich kann der elektrische Strom eine kontinuierliche Leistung zur Erwärmung der rohen Fleischstücke aufweisen, z.B. von Generatoren für die Ohm'sche Erwärmung, z.B. mit einer Leistung von 1 bis 150 kW, bevorzugt 10 bis 35 kW oder 15 bis 25 kW. Dabei kann eine Hülle in dem Innenvolumen angeordnet sein, die an den Arbeitsflächen anliegt und zumindest anliegend an die elektrischen Kontakte elektrisch leitfähige Abschnitte aufweist oder vollständig elektrisch leitfähig ist. Weiter optional können die Arbeitsflächen zumindest abschnittsweise elektrische Kontakte aufweisen, die nadelförmige Aufsätze aufweisen. Solche nadelförmigen Aufsätze von elektrischen Kontakten können durch eine Hülle, z.B. Folie, stechen, um so einen elektronischen Kontakt zu den rohen Fleischstücken herzustellen.

Die Anordnung der Arbeitsflächen um ein Innenvolumen, in dem die rohen Fleischstücke anzuordnen sind und der Antrieb zumindest einer Arbeitsfläche zu einer Hin- und Herbewegung bei der Frequenz führt zu einer intensiven mechanischen Belastung der rohen Fleischstücke, die zu deren Verkleben oder zur Aufnahme einer wässrigen oder öligen Zusammensetzung innerhalb wesentlich kürzerer Zeit führt als z.B. mit einer rotatorisch angetriebenen Behandlungstrommel oder mit einem rotatorisch angetriebenen Mitnehmer innerhalb einer Behandlungstrommel.

Die rohen Fleischstücke müssen sich innerhalb des Innenvolumens nicht frei gegeneinander bewegen können und können überdies beim Verfahren den Innenraum bzw. das Innenvolumen im Wesentlichen vollständig ausfüllen. Daher erlaubt die Vorrichtung ein Verfahren zur Herstellung, bei dem die rohen Fleischstücke innerhalb einer elastischen oder starren Hülle angeordnet sind, die optional unter Vakuum stehen kann. Des Weiteren erlaubt die Vorrichtung ein Verfahren, bei dem die Fleischstücke anschließend in derselben Hülle geformt und gegart werden.

Die Vorrichtung kann beispielsweise für eine Hin- und Herbewegung der zumindest einen Arbeitsfläche über eine Amplidude von zumindest 5 mm oder zumindest 10 mm, z.B. bis 200 mm, bevorzugter bis 50 mm oder bis 20 mm eingerichtet sein. Weiter bevorzugt ist die Vorrichtung für eine stoßweise Hin- und Herbewegung der Arbeitsfläche eingerichtet. Die Vorrichtung kann für eine lineare, sinusförmige, dreiecksförmige oder bogenförmige Hin- und Herbewegung der Arbeitsfläche eingerichtet sein. Da die Bahn der Hin- und Herbewegung die Belastung der rohen Fleischstücke gegen Arbeitsflächen beeinflusst, ist eine lineare Hin- und Herbewegung für ein Innenvolumen bzw. eine Hülle von rechteckiger Form bzw. eine bogenförmige Hin- und Herbewegung bevorzugt, insbesondere bei einem Innenvolumen bzw. einer Hülle von runder bis ovaler Form. Wenn die Vorrichtung für die Hin- und Herbewegung entlang genau einer Bewegungsachse eingerichtet ist, ist diese Bewegungsachse bevorzugt nicht-linear, z.B. bogenförmig. Denn eine nicht-lineare Bewegungsachse fördert eine gleichmäßige Behandlung rohen Fleischs durch dessen Durchmischung, auch in Anwesenheit einer zugesetzten flüssigen Zusammensetzung.

Die Vorrichtung weist Arbeitsflächen auf, die ein Innenvolumen begrenzen, in dem während des Verfahrens rohe Fleischstücke angeordnet sind. Die Arbeitsflächen können den Innenraum optional umfänglich dicht umschließen oder mit Abstand zueinander angeordnet sein, wobei bevorzugt ist, dass beim Verfahren die rohen Fleischstücke in einer Hülle, z.B. einer Kunststofffolie, eingeschlossen sind.

Bevorzugt ist eine untere Arbeitsfläche zu öffnen bzw. von dem Innenvolumen wegzubewegen, um das Innenvolumen zum Herausfallenlassen der rohen Fleischstücke nach der Hin- und Herbewegung öffnen zu können. Weiter bevorzugt ist eine obere Arbeitsfläche von dem Innenvolumen wegzubewegen, um das Innenvolumen zum Einfüllen der rohen Fleischstücke öffnen zu können. Auf diese Weise kann die Vorrichtung beim Verfahren zur satzweisen Behandlung mit rohen Fleischstücken nach Öffnen einer oberen Arbeitsfläche befüllt werden, mit anschließendem Schließen des Innenvolumens mittels der oberen Arbeitsfläche, und nach der Hin- und Herbewegung Öffnen einer unteren Arbeitsfläche zum Herausfallenlassen der rohen Fleischstücke. Solche zu öffnenden oberen und unteren Arbeitsflächen können durch nur eine Arbeitsfläche gebildet werden, wenn die Vorrichtung von einer ersten Stellung, in der die eine Arbeitsfläche oberhalb des Innenvolumens angeordnet ist, in eine zweite Stellung, in der diese Arbeitsfläche unterhalb des Innenvolumens angeordnet ist.

Generell bevorzugt sind die Arbeitsflächen während des Tumblens temperiert, insbesondere gekühlt.

Generell können die Arbeitsflächen beispielsweise zu einem Kasten mit dreieckigem oder viereckigem, wahlweise vieleckigem Querschnitt angeordnet sein. Alternativ können die Arbeitsflächen einen Innenraum mit ovalem oder rundem Querschnitt umfassen, dessen endständige Öffnungen mit Arbeitsflächen überdeckt sind, die gewölbt oder eben sein können. Bevorzugt umfassen die Arbeitsflächen ein zylindrisches Innenvolumen.

In einer ersten Ausführungsform sind die Arbeitsflächen zueinander fixierbar und die Vorrichtung ist dadurch zur mechanischen Belastung der in dem von den Arbeitsflächen begrenzten Innenraum angeordneten rohen Fleischstücke mittels einer Hin- und Herbewegung eingerichtet, dass die Arbeitsflächen gegeneinander fixiert sind und mit einem Antriebsmotor für die Hin- und Herbewegung verbunden sind. Ein Antriebsmotor kann generell eine drehende Antriebswelle, z.B. mit einem Exzenterantrieb aufweisen, oder ein Antriebsmotor kann ein Linearantrieb sein, z.B. ein elektrischer oder hydraulischer bzw. pneumatischer linear wirkender Antrieb.

Die Hin- und Herbewegung kann eine lineare Bewegung sein, wobei die Anordnung aus Arbeitsflächen linear beweglich gelagert ist, oder eine bogenförmige Bewegung einschließlich einer Bewegung entlang einer niederfrequenten Lissajousfigur, wobei die Anordnung der Arbeitsflächen z.B. an einem Schwenklager gelagert ist und in einem Abstand dazu, beispielsweise an einer dem Schwenklager gegenüberliegenden Arbeitsfläche, mit einem Antriebsmotor für eine Hin- und Herbewegung verbunden ist.

Die oben genannten Bewegungen können ihrer Intensität und Amplitude über Sensoren für den jeweiligen Prozess optimiert werden, da die Füllmenge der Formen schwanken kann. Die Sensoren messen z.B. Krafteinleitung (z.B. Drucksensoren), Leitfähigkeit und/oder Farbe und sind in oder auf Arbeitsflächen angeordnet.

In einer Ausführungsform kann die fixierte Anordnung der Arbeitsflächen zueinander beweglich in einem Gestell gelagert sein, wobei zwischen dem Gestell und der Anordnung aus Arbeitsflächen ein Antrieb für die Hin- und Herbewegung der fixierten Anordnung der Arbeitsflächen relativ zum Gestell angebracht ist. In dieser Ausführungsform können optional zwei oder mehr Anordnungen von Arbeitsflächen angeordnet sein, die einen gemeinsamen Antrieb für die Hin- und Herbewegung aufweisen, die so vom Antrieb angetrieben sind, dass ihre Hin- und Herbewegung gegenläufig ist. Eine solche Ausführungsform hat den Vorteil, dass ein Ausgleich für die Schwingungen der Hin- und Herbewegung durch die zumindest zwei zu einer gegenläufigen Hin- und Herbewegung angetriebenen Anordnungen von Arbeitsflächen erfolgt.

In einer Ausführungsform kann die Vorrichtung zur Erzeugung einer Rollbewegung der rohen Fleischstücke eingerichtet sein, wobei bevorzugt eine Hülle in dem von den Arbeitsflächen aufgespannten Innenvolumen angeordnet ist, deren mittlerer Querschnitt kleiner als der parallele mittlere Querschnitt des Innenvolumens ist. Zur Erzeugung einer Rollbewegung spannen die Arbeitsflächen z.B. ein Innenvolumen mit zumindest drei- oder viereckigem, bevorzugter fünf- bis achteckigem, symmetrischem oder nicht symmetrischem Querschnitt, z.B. ovalem oder rundem Querschnitt auf und die Vorrichtung ist zu einer Hin- und Herbewegung entlang einer Bewegungsachse bzw. in einer Ebene eingerichtet, die etwa parallel bis in einem kleinen Winkel, z.B. von max. 20° zu diesem Querschnitt verläuft. Die Rollbewegung, die in eine Richtung verlaufen kann, bewirkt die Hin- und Herbewegung der Arbeitsfläche.

In einer geschlossenen Form kann durch eine Unterfüllung (z.B. Füllung zu 80%) des Innenvolumens, das von den Arbeitsflächen aufgespannt wird mit Fleisch ein rundes Produkt erzeugt werden, indem die Vorrichtung zur Erzeugung der Hin- und Herbewegung in Form niederfrequenter Lissajousfiguren eingerichtet ist, z.B. dadurch, dass der Antriebsmotor gesteuert ist, Schwingungen einer Anordnung von Arbeitsflächen für deren rotationsbegünstigende niederfrequente Lissajousfiguren zu erzeugen. Da die rohen Fleischstücke während des Verfahrens anfangen aneinander zu haften, entsteht im Laufe des Verfahrens eine Abrollbewegung, die zur Herstellung von Fleischwaren mit etwa rundem Querschnitt führt. Dabei kann die Hin- und Herbewegung auch eine umlaufende Bewegung sein bzw. durch eine umlaufende Bewegung entlang zumindest einer Bewegungsachse der um das Innenvolumen in einer Anordnung fixierten Arbeitsflächen bewirkt werden.

Die Hin- und Herbewegung kann eine lineare Bewegung sein, wobei auch eine Arbeitsfläche linear beweglich sein kann, oder eine bogenförmige Bewegung, wobei die zumindest eine Arbeitsfläche z.B. an einem Schwenklager gelagert ist und in einem Abstand dazu, beispielsweise an einer dem Schwenklager gegenüberliegenden Arbeitsfläche, mit einem Antriebsmotor für eine Hin- und Herbewegung verbunden ist.

In den Ausführungsformen ist bevorzugt, dass ein Verfahren das von den Arbeitsflächen aufgespannte Innenvolumen zu 10 - 100 Vol.-%, bevorzugter 40 - 100 Vol.-%, bevorzugter 70 - 95 Vol.-%, noch bevorzugter 80 - 90 Vol.-% gefüllt ist, um bei der Hin- und Herbewegung der Anordnung aus gegeneinander fixierten Arbeitsflächen eine effektive mechanische Belastung der rohen Fleischstücke gegen Arbeitsflächen zu erreichen.

Das Verfahren zeigt, dass die mechanische Belastung der rohen Fleischstücke mittels Hin- und Herbewegung zumindest einer Arbeitsfläche relativ gegen die Fleischstücke oder auch das Beaufschlagen der zusammengelegten rohen Fleischstücke mit einem Impuls, der die rohen Fleischstücke durchdringt, zu einer effektiven Behandlung führt, insbesondere zum Tumblen für das anschließende Verkleben und Garen, insbesondere für Kochschinken, und/oder zur effektiven Aufnahme einer wässrigen oder öligen Zusammensetzung, die dem rohen Fleisch zugegeben wurde. Die mechanische Belastung führt durch die Geschwindigkeitsänderung (bzw. Beschleunigung) der rohen Fleischstücke zu deren Verdichtung. Es hat sich gezeigt, dass die mechanische Belastung gegen die Arbeitswände durch die Hin- und Herbewegung mit der Frequenz ausreicht, die Fleischstruktur hinreichend aufzuschließen, bzw. Fleischsaft austreten zu lassen, um die rohen Fleischstücke aneinander haften zu lassen bzw. miteinander zu verkleben, sodass das anschließende Garen zu einer gegarten Masse aus Fleischstücken führt. Dabei wird ein mit dem herkömmlichen Poltern bzw. Tumbeln in einer Trommel über 8 Stunden vergleichbares Ergebnis innerhalb von 30 bis 60 Minuten, bevorzugt innerhalb von maximal 10 min oder maximal 5 min, z.B. bei einer Frequenz der Hin- und Herbewegung von 10 bis 1 Hz, insbesondere 8 Hz, mit der erfindungsgemäßen Vorrichtung erreicht.

Ein besonderer Vorteil der erfindungsgemäßen Vorrichtung liegt darin, dass sie das mechanische Belasten der rohen Fleischstücke ermöglicht, wenn diese in einer Hülle eingeschlossen sind, wahlweise unter Vakuum. Daher ermöglicht die Vorrichtung ein Verfahren, bei dem die rohen Fleischstücke von einer Hülle umschlossen sind, wahlweise unter Luftausschluss bzw. unter Vakuum, und mechanisch belastet werden, mit anschließender Garung in der Hülle. Diese Ausführungsform erlaubt überdies die Handhabung der mechanisch belasteten Fleischstücke als eine von der Hülle umschlossene Masse und kann so die Handhabung zum Einfüllen loser Fleischstücke in eine Form für die Garung vermeiden, wie dies bei herkömmlichen Poltergeräten erforderlich ist, und reduziert die Kontaktzeit der Fleischstücke mit Umgebungsluft, was die mögliche Kontamination beschränkt.

### Genaue Beschreibung der Erfindung

Die Erfindung wird nun genauer mit Bezug auf die Figuren beschrieben, die schematisch
- in Figur 1 eine Ausführungsform der Vorrichtung,
- in Figur 2 eine weitere Ausführungsform der Vorrichtung zeigen.

In den Figuren bezeichnen gleiche Bezugsziffern funktionsgleiche Elemente. In allen Ausführungsformen kann das von den Arbeitsflächen 1-4 aufgespannte Innenvolumen von einer elastischen Hülle 11 oder einer starren Hülle 7 ausgekleidet sein, in welcher beim Verfahren die rohen Fleischstücke 6 angeordnet sind.

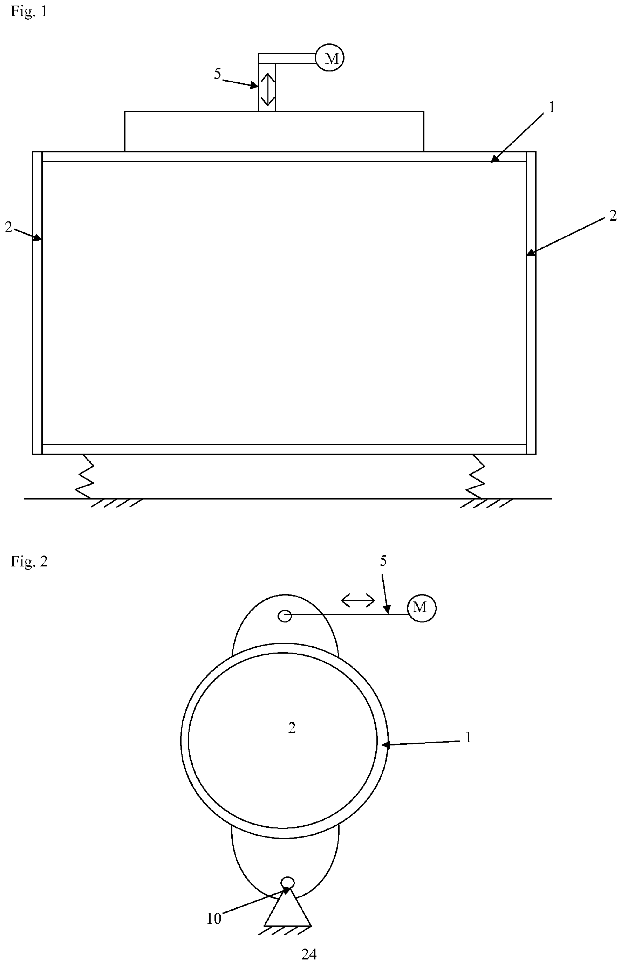

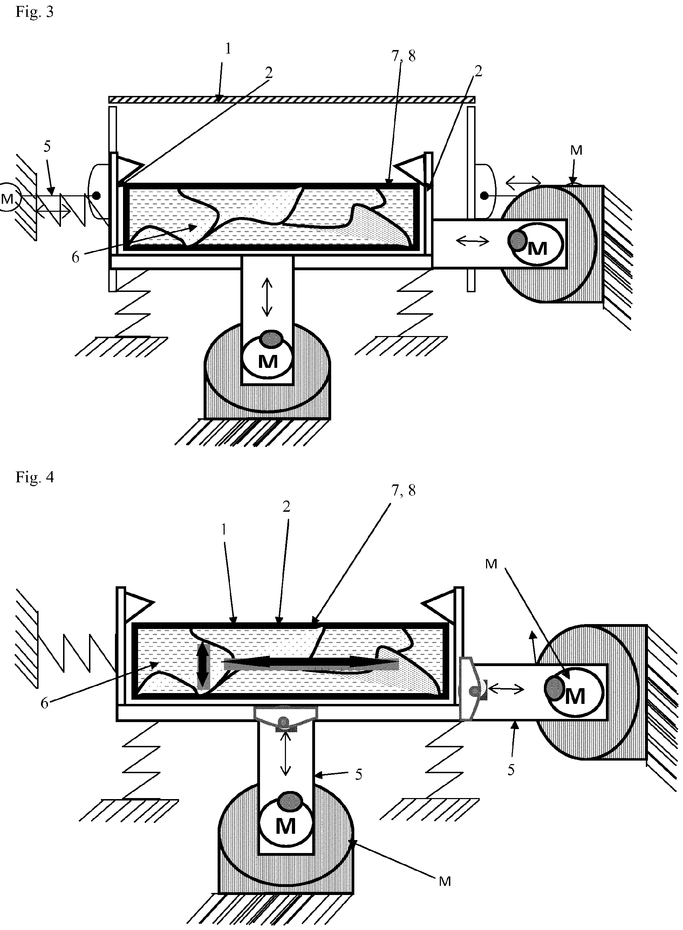

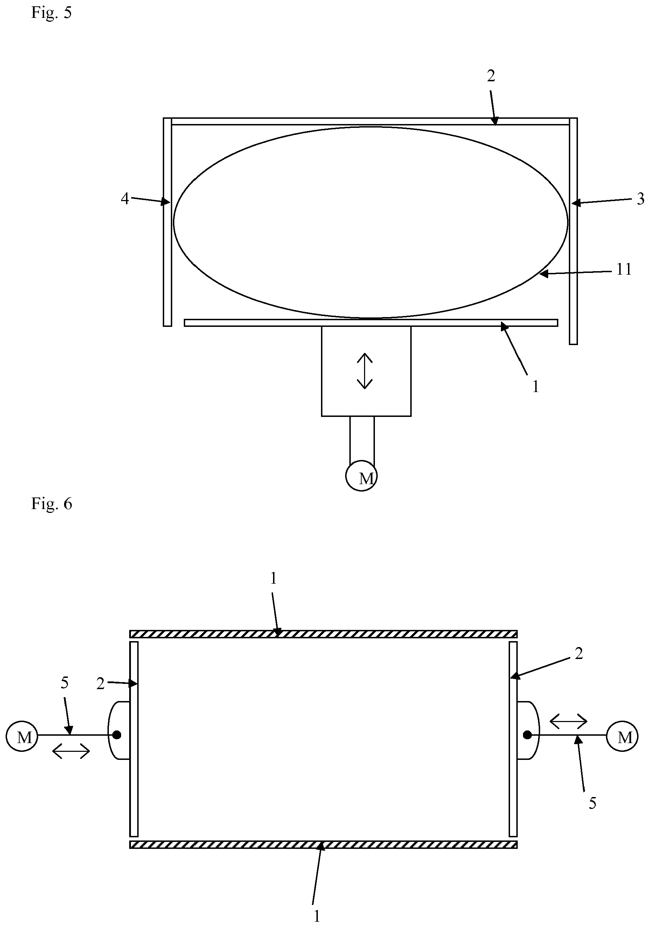

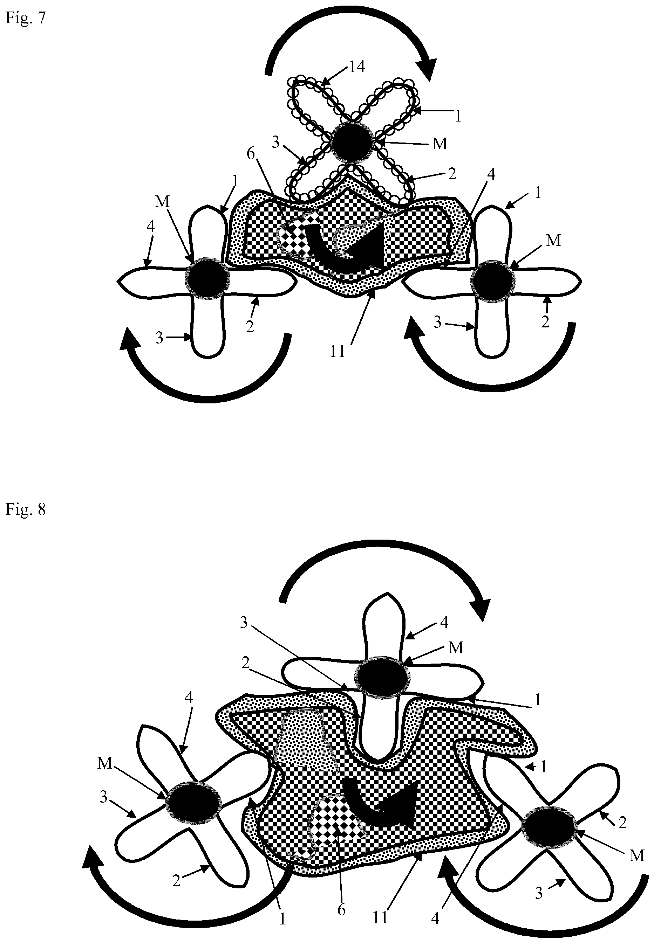

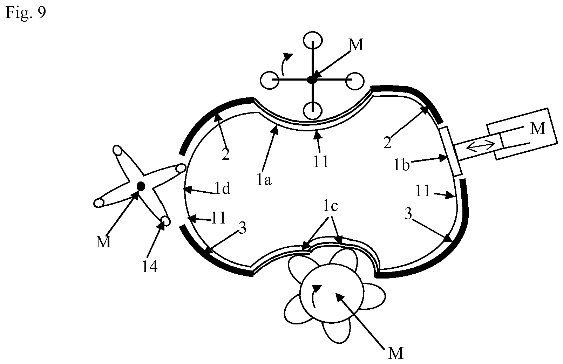

Fig. 1 zeigt eine Ausführungsform, bei der die rohen Fleischstücke 6 in einer starren Hülle 7 angeordnet sind, z.B. einem Kochkasten 8 mit gegeneinander fixierten Wänden. Die Hülle 7 ist von Arbeitsflächen 1-4 eingefasst, so dass die von den Antriebsmotoren M auf die Arbeitsflächen 1-4 übertragenen Bewegungen auf die starre Hülle 7 wirken. Auf Grund der Trägheit der rohen Fleischstücke 6, die von den Arbeitsflächen 1-4 bzw. der starren Hülle 7 umfasst sind, werden diese rohen Fleischstücke 6 bei der Hin- und Herbewegung der Arbeitsflächen 1-4 mechanisch belastet. Die Antriebsmotoren M können so angeordnet sein, dass die Richtungen der erzeugten Bewegungen etwa senkrecht zueinander stehen, so dass bevorzugt die gegeneinander fixierten Arbeitsflächen 1-4 in alle drei Raumrichtungen bewegt werden. Die angedeuteten Federelemente 9 stellen eine Lagerung für die Arbeitsflächen 1-4 dar. Die Antriebsmotoren M sind mit drehenden Antriebswellen mit einem Exzenterantrieb 12 schematisch angedeutet. Alternativ können die Antriebsmotoren M Linearantriebe sein, z.B. elektrische oder hydraulische bzw. pneumatische Linearantriebe sein.

Fig. 2 zeigt eine Ausführungsform, bei der die Arbeitsflächen 1-4 entsprechend der in Fig. 1 gezeigten Ausführungsform eine starre Hülle 7 einfassen, in der während des Verfahrens die rohen Fleischstücke angeordnet sind. Innerhalb der starren Hülle 7 kann eine elastische Hülle 11 angeordnet sein, in der während des Verfahrens die rohen Fleischstücke enthalten sind, wobei bevorzugt die elastische Hülle vakuumiert ist, um dicht und im Wesentlichen ohne Lufteinschlüsse die rohen Fleischstücke, ggf. in Mischung mit Salz und Gewürzen, einzuschließen. Bei Verwendung von Drehantrieben als Antriebsmotoren M ist bevorzugt, dass die Verbindung zur Anordnung aus gegeneinander fixierten Arbeitsflächen mittels eines Exzenterantriebs 12 am Antriebsmotor und eines Drehlagers 13 hergestellt ist. Generell kann die Vorrichtung wie hier gezeigt 2 Antriebsmotoren aufweisen, die mit der Anordnung aus gegeneinander fixierten Arbeitsflächen verbunden ist, um diese in zwei in einem Winkel, insbesondere senkrecht, zueinander angeordneten Hin- und Herbewegungen anzutreiben. Generell können zwei oder mehr Antriebsmotoren zu Bewegungen gesteuert sein, die sich zu Lissajous-Figuren überlagern.

### Beispiel: Einbringen wässriger Zusammensetzung in rohes Fleisch

Als Beispiel für rohes Fleisch wurde 10 kg Hähnchenbrust ohne Haut und Knochen, nicht zerkleinert, mit 20 Gew.-% wässriger Zusammensetzung aus 12 Gew.-% Kochsalz, 6 Gew.-% Kartoffelstärke, 1,2 Gew.-% Phosphat, Wasser zu 100%, in einen zu schließenden starren Kochkasten gefüllt, der mit einem fixierten Deckel verschlossen wurde.

Der Kochkasten wurde entlang einer ersten Bewegungsachse mit 5 Hz über eine Amplitude von 7 cm für 8 min hin- und herbewegt. Im Anschluß an diese Hin- und Herbewegung hatte das rohe Hähnchenbrustfleisch die wässrige Zusammensetzung im Wesentlichen vollständig aufgenommen.

Alternativ wurde die Hin- und Herbewegung entlang der ersten Bewegungsachse mit 5 Hz und zusätzlich entlang einer dazu senkrechten zweiten Bewegungsachse mit 4,1 Hz, jeweils über eine Amplitude von 7 cm für 5 min hin- und herbewegt.

Alternativ konnte das Fleisch mit der wässrigen Zusammensetzung in einer Kunststoffhülle enthalten sein, aus der Luft abgezogen war, und die gefüllte Kunststoffhülle in dem Kochkasten, der mit einem fixierten Deckel verschlossen war, mit der Hin- und Herbewegung des Kochkastens belastet werden.

| | |
|---|---|
| Bezugszeichenliste: | 4 Arbeitsfläche |
| 1, 1a, 1b, 1c, 1d Arbeitsfläche | 5 Antriebsarm |
| 2 Arbeitsfläche | 6 rohe Fleischstücke |
| 3 Arbeitsfläche | 7 starre Hülle |
| 8 Kochkiste | 12 Exzenter |
| 9 Federelemente | 13 Drehlager |
| 10 Schwenklager | 14 Rolle |
| 11 elastische Hülle | M Antriebsmotor |

## Patentansprüche

1. Vorrichtung zur Verwendung als Fleischbehandlungsmaschine zur Herstellung von Fleischwaren mit diskontinuierlich oder kontinuierlich angeordneten Arbeitsflächen (1, 2, 3, 4), die ein Innenvolumen umfassen und von denen zumindest eine Arbeitsfläche (1) zur mechanischen Belastung gegen im Innenvolumen anzuordnende rohe Fleischstücke eingerichtet ist, wobei die Arbeitsflächen (1, 2, 3, 4) relativ zueinander zu einer Anordnung fixiert sind und in dieser Anordnung zu einer zwangsgeführten Hin- und Herbewegung mit einer Frequenz von zumindest 1 Hz über eine Amplitude von zumindest 5 mm mittels eines Antriebsmotors (M) angetrieben ist, wobei die Anordnung aus gegeneinander fixierten Arbeitsflächen (1, 2, 3, 4) zur Bewegung entlang zumindest zweier Bewegungsachsen geführt ist, wobei die Vorrichtung eingerichtet ist, die Anordnung entlang der Bewegungsachsen bei jeweils unterschiedlichen Frequenzen zu einer Hin- und Herbewegung anzutreiben.

2. Vorrichtung nach Anspruch 1, **dadurch gekennzeichnet, dass** das Innenvolumen mit einer elastischen Hülle (11) oder einer starren Hülle (7) ausgekleidet ist.

3. Vorrichtung nach Anspruch 1 oder 2, **dadurch gekennzeichnet, dass** die Anordnung aus gegeneinander fixierten Arbeitsflächen (1, 2, 3, 4) in einem Gestell für die Hin- und Herbewegung geführt ist.

4. Vorrichtung nach einem der voranstehenden Ansprüche, **dadurch gekennzeichnet, dass** die Vorrichtung zwei Anordnungen aus gegeneinander fixierten Arbeitsflächen (1, 2, 3, 4) aufweist, die in einem gemeinsamen Gestell zu einer gegenläufigen Hin- und Herbewegung angetrieben sind.

5. Vorrichtung nach einem der voranstehenden Ansprüche 2 bis 4, **dadurch gekennzeichnet, dass** in Arbeitsflächen (1, 2, 3, 4) zwei beabstandete elektrische Kontakte angeordnet sind, die mit einem Leitfähigkeits- oder Impedanzmessgerät verbunden sind und dass die elastische Hülle (11) oder starre Hülle (7) zumindest angrenzend an die elektrischen Kontakte elektrisch leitfähig ist oder die elektrischen Kontakte die elastische Hülle (11) oder starre Hülle (7) durchdringen.

6. Vorrichtung nach Anspruch 5, **dadurch gekennzeichnet, dass** der Antriebsmotor (M) abhängig von dem Leitfähigkeits- oder Impedanzmessgerät oder abhängig von einem Detektor für den Anteil wässriger Zusammensetzung, die innerhalb des Innenvolumens neben den rohen Fleischstücken vorliegt, gesteuert ist.

7. Vorrichtung nach einem der voranstehenden Ansprüche 2 bis 6, **dadurch gekennzeichnet, dass** das von den Arbeitsflächen umfasste Innenvolumen einen zumindest dreieckigen Querschnitt aufweist und der mittlere Querschnitt der Hülle (7, 11) kleiner als der mittlere Querschnitts des Innenvolumens ist und dass die Ebene der Hin- und Herbewegung in einer Ebene liegt, die parallel bis maximal 20° zum Querschnitt des Innenvolumens liegt.

8. Vorrichtung nach einem der voranstehenden Ansprüche, **dadurch gekennzeichnet, dass** in Arbeitsflächen (1, 2, 3, 4) zumindest 2 beabstandete elektrische Kontakte angeordnet sind, die mit einem Generator zur Erzeugung von elektrischem Strom verbunden sind und dass die elastische Hülle (11) oder starre Hülle (7) zumindest angrenzend an die elektrischen Kontakte elektrisch leitfähig ist oder die elektrischen Kontakte die elastische Hülle (11) oder starre Hülle (7) durchdringen.

9. Vorrichtung nach einem der voranstehenden Ansprüche, **dadurch gekennzeichnet, dass** eine Arbeitsfläche (1, 2, 3, 4) in einer ersten Stellung festlegbar ist, in der das von den Arbeitsflächen (1, 2, 3, 4) umfasste Innenvolumen nur anteilig mit rohen Fleischstücken gefüllt ist und die Arbeitsfläche (1, 2, 3, 4) anschließend für die Garung in eine zweite Stellung beweglich und in dieser festlegbar ist, in der die rohen Fleischstücke gegeneinander gedrückt werden, bis das von den Arbeitsflächen (1, 2, 3, 4) umfasste Innenvolumen vollständig mit rohen Fleischstücken gefüllt ist.

10. Vorrichtung nach einem der voranstehenden Ansprüche, **dadurch gekennzeichnet, dass** die Anordnung zu einer zwangsgeführten Hin- und Herbewegung für zumindest 0,5 min angetrieben ist..

11. Vorrichtung nach einem der voranstehenden Ansprüche, **dadurch gekennzeichnet, dass** die Amplitude für die Hin- und Herbewegung einstellbar ist.

12. Vorrichtung nach einem der voranstehenden Ansprüche, **dadurch gekennzeichnet, dass** eine untere Arbeitsfläche von dem Innenvolumen wegzubewegen ist, um das Innenvolumen zum Herausfallenlassen der rohen Fleischstücke nach der Hin- und Herbewegung öffnen zu können, und dass eine obere Arbeitsfläche von dem Innenvolumen wegzubewegen ist, um das Innenvolumen zum Einfüllen der rohen Fleischstücke öffnen zu können.

13. Verwendung einer Vorrichtung nach einem der voranstehenden Ansprüche als Fleischbehandlungsmaschine zur Herstellung von Fleischwaren.

14. Verfahren zur Herstellung von Fleischwaren durch mechanisches Belasten von rohen Fleischstücken (6), wobei die rohen Fleischstücke (6) relativ zu einer Arbeitsfläche bewegt werden, wobei die rohen Fleischstücke (6) in einem Innenvolumen angeordnet sind, das von Arbeitsflächen umfasst ist, die in einer Anordnung zueinander fixiert sind und in dieser Anordnung zur Hin- und Herbewegung angetrieben sind und von denen zumindest eine Arbeitsfläche (1, 2, 3, 4) angetrieben ist und mit einer Frequenz von zumindest 1 Hz über eine Amplitude von zumindest 5 mm relativ gegen die rohen Fleischstücke (6) bewegt wird, wobei die Hin- und Herbewegung entlang zweier oder dreier Bewegungsachsen, die jeweils in einem Winkel aufeinanderstehen, bei jeweils unterschiedlicher Frequenz erfolgt.

15. Verfahren nach Anspruch 14, **dadurch gekennzeichnet, dass** die rohen Fleischstücke (6) von einer Hülle (7, 11) umschlossen sind und die zumindest eine angetriebene Arbeitsfläche (1, 2, 3, 4) relativ gegen die Hülle (7, 11) bewegt wird, und die rohen Fleischstücke (6) anschließend in der Hülle (7, 11) gegart werden.

16. Verfahren nach Anspruch 15, **dadurch gekennzeichnet, dass** die Fleischstücke unter Luftausschluss von der Hülle (7, 11) eingeschlossen sind.

17. Verfahren nach einem der Ansprüche 14 bis 16, **dadurch gekennzeichnet, dass** die rohen Fleischstücke (6) das von den Arbeitsflächen (1, 2, 3, 4) umfasste Innenvolumen zu 70 bis 95 % füllen.

18. Verfahren nach einem der Ansprüche 14 bis 17, **dadurch gekennzeichnet, dass** die rohen Fleischstücke (6) in Mischung mit einer wässrigen oder öligen Zusammensetzung und/oder festem Salz vorliegen.

19. Verfahren nach einem der Ansprüche 14 bis 18, **dadurch gekennzeichnet, dass** die Bewegung nicht-linear ist und bei einem Unterschied von 5 bis 50% der Frequenzen relativ zur höheren Frequenz erfolgt.

20. Verfahren nach einem der Ansprüche 14 bis 19, **dadurch gekennzeichnet, dass** die Bewegung für 0,5 bis 10 min erfolgt.

## Claims

1. Device for use as a meat processing machine for producing meat products with discontinuously or continuously arranged work surfaces (1, 2, 3, 4), which encompass an internal volume, at least one work surface (1) of which is arranged for mechanical loading against raw pieces of meat to be arranged in the internal volume, wherein the work surfaces (1, 1a, 1b, 1c, 1d) are fixed relative to one another into an assembly and in this assembly are driven to perform a guided reciprocating movement with a frequency of at least 1 Hz for an amplitude of at least 5 mm by means of a drive motor (M), wherein the assembly of work surfaces (1, 1a, 1b, 1c, 1d) fixed against one another is guided to the movement along at least two motion axes, wherein the device is set up to drive the assembly along the motion axes each at different frequencies to a reciprocating movement.

2. Device according to claim 1, **characterized in that** the internal volume is lined with an elastic sheath (11) or a rigid sheath (7).

3. Device according to claim 1 or 2, **characterized in that** the assembly of work surfaces (1, 2, 3, 4) fixed against one another is guided in a mount for the reciprocating movement.

4. Device according to any one of the preceding claims, **characterized in that** the device has two assemblies of work surfaces (1, 2, 3, 4) fixed against one another, which are driven in a common mount to an antagonistic reciprocating movement.

5. Device according to one of the preceding claims 2 to 4, **characterized in that** in work surfaces (1, 2, 3, 4) two spaced-apart electric contacts are arranged, which are connected with a conductivity measuring device or an impedance measuring device and **in that** the elastic sheath (11) or rigid sheath (7) is electrically conductive at least in the area adjacent to the electric contacts or the electric contacts penetrate the elastic sheath (11) or rigid sheath (7).

6. Device according to claim 5, **characterized in that** the drive motor (M) is controlled depending on the conductivity measuring device or impedance measuring device or depending on a detector for the amount of aqueous composition, which is present within the internal volume in addition to the raw pieces of meat.

7. Device according to one of the preceding claims 2 to 6, **characterized in that** the internal volume comprised by the work surfaces has an at least triangular cross-section and the mean cross-section of the sheath (7, 11) is smaller than the mean cross-section of the internal volume and **in that** the plane of the reciprocating movement is in a plane that is parallel up to maximally 20° to the cross-section of the internal volume.

8. Device according to one of the preceding claims, **characterized in that** in work surfaces (1, 2, 3, 4) at least 2 spaced-apart electric contacts are arranged, which are connected with a generator for production of electric current and **in that** the elastic sheath (11) or rigid sheath (7) is electrically conductive at least in the area adjacent to the electric contacts or the electric contacts penetrate the elastic sheath (11) or rigid sheath (7).

9. Device according to one of the preceding claims, **characterized in that** a work surface (1, 2, 3, 4) is fixable in a first position, in which the internal volume comprised by the work surfaces is filled only proportionally with raw pieces of meat and the work surface can subsequently be moved to a second position and fixed in this position, in which second position the raw pieces of meat are pressed against one another until the internal volume comprised by the work surfaces (1, 2, 3, 4) is completely filled with raw pieces of meat.

10. Device according to one of the preceding claims, **characterized in that** the assembly is driven to perform a guided reciprocating movement for at least 0.5 min.

11. Device according to one of the preceding claims, wherein the amplitude of the reciprocating movement is adjustable.

12. Device according to one of the preceding claims, **characterized in that** a lower work surface can be moved away from the internal volume in order to open the internal volume for dropping the raw pieces of meat after the reciprocating movement and that an upper work surface can be moved away from the internal volume in order to open the internal volume for filling in of the raw pieces of meat.

13. Use of a device according to one of the preceding claims as a meat processing machine for producing meat products.

14. Process for producing meat products by mechanical loading of raw pieces of meat (6), wherein the raw pieces of meat (6) are moved relative to a work surface, wherein the raw pieces of meat (6) are arranged in an internal volume, which is encompassed by work surfaces which are fixed to one another in an assembly and are driven in this assembly to a reciprocating movement, at least one work surface (1, 2, 3, 4) of which is driven and is moved with a frequency of at least 1 Hz relatively against the raw pieces of meat (6), wherein the reciprocating movement takes place along two or three axes of movement which are each at an angle with respect to each other, each at different frequency.

15. Process according to claim 14, **characterized in that** the raw pieces of meat (6) are enclosed by a sheath (7, 11) and the at least one driven work surface (1, 2, 3, 4) is moved relatively against the sheath (7, 11), and the raw pieces of meat (6) are subsequently cooked in the sheath (7, 11).

16. Process according to claim 15, **characterized in that** the pieces of meat are enclosed by the sheath (7, 11) under exclusion of air.

17. Process according to one of claims 14 to 16, **characterized in that** the raw pieces of meat (6) fill the internal volume encompassed by the work surfaces (1, 2, 3, 4) to 70 to 95%.

18. Process according to one of claims 14 to 17, **characterized in that** the raw pieces of meat (6) are present in a mixture with an aqueous or an oily composition and/or solid salt.

19. Process according to one of claims 14 to 18, **characterized in that** the movement is nonlinear and is performed with a difference of 5 to 50 % of the frequencies with respect to the higher frequency.

20. Process according to one of claims 14 to 19, **characterized in that** the reciprocating movement is for 0.5 to 10 min.

## Revendications

1. Dispositif destiné à être utilisé comme machine de traitement de la viande pour la fabrication de produits à base de viande avec des surfaces de travail (1, 2, 3, 4) disposées de manière discontinue ou continue, qui présentent un volume intérieur et dont au moins une surface de travail (1) est disposée pour le chargement mécanique de morceaux de viande brutes à disposer dans le volume intérieur, les surfaces de travail (1, 2, 3, 4) étant fixées l'une par rapport à l'autre pour obtenir un agencement donné et, ledit agencement permet un mouvement de va-et-vient à guidage forcé, à une fréquence d'au moins 1 Hz sur une amplitude d'au moins 5 mm à l'aide d'un moteur (M), ledit agencement étant guidé par des surfaces de travail (1, 2, 3, 4) fixes l'une par rapport à l'autre pour se déplacer selon au moins deux axes de déplacement, dans lequel le dispositif est prévu pour entraîner l'agencement le long des axes de mouvement à des fréquences respectives différentes pour obtenir un mouvement de va-et-vient.

2. Dispositif selon la revendication 1, **caractérisé en ce que** le volume intérieur est revêtu d'une gaine élastique (11) ou d'une gaine rigide (7).

3. Dispositif selon les revendications 1 ou 2, **caractérisé en ce que** l'agencement des surfaces de travail (1, 2, 3, 4) fixées l'une contre l'autre est guidé dans un cadre pour effectuer le mouvement de va-et-vient.

4. Dispositif selon l'une des revendications précédentes, **caractérisé en ce que** le dispositif présente deux agencements de surfaces de travail (1, 2, 3, 4) fixées l'une contre l'autre et sont entraînées dans un cadre commun pour un mouvement de va-et-vient dans des directions opposées.

5. Dispositif selon l'une des revendications précédentes 2 à 4, **caractérisé en ce que** deux contacts électriques espacés sont disposés dans des surfaces de travail (1, 2, 3, 4) qui sont reliées à un dispositif de mesure de conductivité ou d'impédance, et **en ce que** la gaine élastique (11) ou la gaine rigide (7) sont électriquement conductrices au moins au niveau des contacts électriques ou bien les contacts électriques traversent la gaine élastique (11) ou la gaine rigide (7).

6. Dispositif selon la revendication 5, **caractérisé en ce que** le moteur d'entraînement (M) est commandé en fonction du dispositif de mesure de conductivité ou d'impédance ou en fonction d'un détecteur de proportion de composition aqueuse présente dans le volume interne en plus des morceaux de viande crue.

7. Dispositif selon l'une des revendications précédentes 2 à 6, **caractérisé en ce que** le volume intérieur entouré par les surfaces de travail présente une section transversale au moins triangulaire et la section transversale moyenne de la gaine (7, 11) est inférieure à la section transversale moyenne du volume intérieur, et **en ce que** le plan du mouvement de va-et-vient est situé dans un plan qui est parallèle au plus à 20° par rapport à la section transversale du volume intérieur.

8. Dispositif selon l'une des revendications précédentes, **caractérisé en ce que** dans des surfaces de travail (1, 2, 3, 4) sont disposés au moins 2 contacts électriques espacés qui sont reliés à un générateur pour générer du courant électrique et **en ce que** la gaine élastique (11) ou la gaine rigide (7) sont électriquement conductrices au moins au niveau des contacts électriques ou bien les contacts électriques traversent la gaine élastique (11) ou la gaine rigide (7).

9. Dispositif selon l'une des revendications précédentes, **caractérisé en ce qu'**une surface de travail (1, 2, 3, 4) peut être fixée dans une première position, dans laquelle le volume interne entouré par les surfaces de travail (1, 2, 3, 4) n'est que partiellement rempli de morceaux de viande crue et la surface de travail (1, 2, 3, 4) est ensuite mobile pour la cuisson et peut être fixée dans une seconde position dans laquelle les morceaux de viande crue sont pressés les uns contre les autres jusqu'à ce que le volume intérieur entouré par les surfaces de travail (1, 2, 3, 4) soit complètement rempli de morceaux de viande crue.

10. Dispositif selon l'une des revendications précédentes, **caractérisé en ce que** le dispositif est entraîné dans un mouvement de va-et-vient à guidage forcé pendant au moins 0,5 minute.

11. Dispositif selon l'une des revendications précédentes, **caractérisé en ce que** l'amplitude du mouvement de va-et-vient est réglable.

12. Dispositif selon l'une des revendications précédentes, **caractérisé en ce qu'**une surface de travail inférieure doit être éloignée du volume intérieur afin de pouvoir ouvrir le volume intérieur pour laisser tomber les morceaux de viande crue après le mouvement de va-et-vient, et **en ce qu'**une surface de travail supérieure doit être éloignée du volume intérieur afin de pouvoir ouvrir le volume intérieur pour y verser les morceaux de viande crue.

13. Utilisation d'un dispositif selon l'une des revendications ci-dessus en tant que machine de traitement de la viande pour la production de produits à base de viande.

14. Procédé de fabrication de produits à base de viande par chargement mécanique de morceaux de viande crue (6), les morceaux de viande crue (6) étant déplacés par rapport à une surface de travail, les morceaux de viande crue (6) étant disposés dans un volume intérieur constitué de surfaces de travail qui sont fixées les unes aux autres dans un agencement et sont entraînées dans un mouvement de va-et-vient dans cet agencement et dont au moins une surface de travail (1, 2, 3, 4) est entraînée et est déplacée à une fréquence d'au moins 1 Hz sur une amplitude d'au moins 5 mm par rapport aux morceaux de viande crue (6), le mouvement de va-et-vient s'effectuant à des fréquences différentes le long de deux ou trois axes de mouvement qui chacun décrivent un angle les uns par rapport aux autres.

15. Procédé selon la revendication 14, **caractérisé en ce que** les morceaux de viande crue (6) sont entourés d'une gaine (7, 11) et ladite au moins une surface de travail entraînée (1, 2, 3, 4) est déplacée de manière relative contre la gaine (7, 11), et les morceaux de viande crue (6) sont ensuite cuits dans la gaine (7, 11).

16. Procédé selon la revendication 15, **caractérisé en ce que** les morceaux de viande sont entourés par la gaine (7, 11) en l'absence d'air.

17. Procédé selon l'une des revendications 14 à 16, **caractérisé en ce que** les morceaux de viande crue (6) remplissent à 70 à 95 % du volume interne constitué par les surfaces de travail (1, 2, 3, 4).

18. Procédé selon l'une quelconque des revendications 14 à 17, **caractérisé en ce que** les morceaux de viande crue (6) sont présents en mélange avec une composition aqueuse ou huileuse et/ou un sel solide.

19. Procédé selon l'une quelconque des revendications 14 à 18, **caractérisé en ce que** le mouvement est non linéaire et se produit à une différence de 5 à 50% des fréquences par rapport à la fréquence supérieure.

20. Procédé selon l'une quelconque des revendications 14 à 19, **caractérisé en ce que** l'agitation est effectuée pendant 0,5 à 10 minutes.
